# EUROPÄISCHE PATENTSCHRIFT

(11) **EP 2 111 684 B1**
(45) Veröffentlichungstag und Bekanntmachung des Hinweises auf die Patenterteilung: **05.04.2017**
(21) Anmeldenummer: 08701128.4
(22) Anmeldetag: 16.01.2008
(51) Int. Cl.: H02J 13/00

(54) **SYSTEM UND VERFAHREN ZUM STEUERN EINER ODER MEHRERER SCHALTANLAGEN**
SYSTEM AND METHOD FOR CONTROLLING ONE OR A PLURALITY OF SWITCH GEARS
SYSTÈME ET PROCÉDÉ POUR CONTRÔLER UNE OU PLUSIEURS INSTALLATIONS DE DISTRIBUTION

(30) Priorität: 26.01.2007 DE 102007004943
(43) Veröffentlichungstag der Anmeldung: 28.10.2009
(73) Patentinhaber: ABB AG, 68309 Mannheim (DE)
(72) Erfinder: GRAF, Ralf, 68259 Mannheim (DE); KÖHLER, Jens, 68535 Edingen-Neckarhausen (DE)
(86) Internationale Anmeldenummer: PCT/EP2008/000281
(87) Internationale Veröffentlichungsnummer: WO 2008/089902

(56) Entgegenhaltungen:
- US-A1- 2004 130 837
- US-A1- 2004 233 598
- US-B1- 6 539 287

## Beschreibung

Die Erfindung betrifft ein System sowie ein Verfahren zum Controlling von einer oder mehreren Schaltanlagen, insbesondere von Niederspannungsschaltanlagen, welche eine effektive und effiziente Überwachung und/oder Steuerung einer oder mehrerer Schaltanlagen erlauben.

In vielen Bereichen der Technik, insbesondere der Automationstechnik, der Prozessindustrie, der Gebäudetechnik oder der Verkehrstechnik werden zur Durchführung von Überwachung- und/oder Steuerungsaufgaben eine Vielzahl unterschiedlicher Sensoren eingesetzt. Auch in zeitgemäßen Schaltanlagen finden sich heute bereits Infrarotsensoren zur Erfassung punktueller Erwärmungen oder Überhitzung oder optische Sensoren zur Erfassung von Störlichtbögen, wobei jeder Sensor für sich einzeln ausgelesen und die einzelnen Informationen separat ausgewertet werden.

Dabei ist bei Ansprechen des jeweiligen Sensors, das entsprechende Fehler- und/oder Störereignis jedoch aller Regel bereits eingetreten, und entsprechender Schaden, zumindest an der jeweiligen Schaltanlage, bereits verursacht.

US6539287 offenbart ein Steuerungssystem für mehrere Lasttrennschalter, umfassend eine übergeordnete zentrale Datenverarbeitungseinrichtung und den Schaltern zugeordneten Verarbeitungseinrichtungen, wobei Stromwerte detektiert und ausgewertet werden zur Bestimmung und Lokalisierung eines Störfalls.

Daraus ergibt sich für die Erfindung die Aufgabe eine Möglichkeit für eine vorausschauende Zustandsüberwachung und Steuerung einer Schaltanlage anzugeben.

Diese Aufgabe wird durch ein System zum Controlling einer oder mehrerer Schaltanlagen mit den Merkmalen des Anspruchs 1 gelöst. Vorteilhafte Ausgestaltungen und Weiterbildungen des Systems sowie ein entsprechendes Verfahren sind in weiteren Ansprüchen und der nachfolgenden Beschreibung angegeben.

Das erfindungsgemäße System zum Controlling einer oder mehrerer Schaltanlage umfasst eine übergeordnete zentrale Datenverarbeitungseinrichtung sowie jeweils wenigstens eine einer jeden Schaltanlage zugeordnete Anlagenverarbeitungseinrichtung, welche über wenigstens eine Kommunikationsverbindung zusammenwirken, um Informationen und/oder Anweisungen auszutauschen. Weiterhin sind für jede Schaltanlage eine oder mehrere Steuer-/Regeleinrichtungen vorgesehen, welche Funktionen und/oder Zustände und/oder Umgebungsbedingungen wenigstens einer Schaltanlagenkomponente, beispielsweise eines Leistungsschalters oder Motorstarters, überwachen und/oder Sensorinformationen wenigstens einer Sensoranordnung erfassen, regelbasiert auswerten und als störkritisch bewertete Kenngrößen über die jeweilige Anlagenverarbeitungseinrichtung an die übergeordnete zentrale Datenverarbeitungseinrichtung übermitteln, wobei die übermittelten Kenngrößen einer Schaltanlage in Zusammenschau ausgewertet und kenngrößenbasiert Meldungen und/oder Anweisungen zur vorausschauenden Störfallermittlung und/oder -vermeidung generiert werden.

Insbesondere umfasst das Controlling dabei ein Überwachen und/oder Steuern/Regeln einer oder mehrerer Schaltanlagen und/oder wenigstens einer ihrer Komponenten.

Durch das Zusammenwirken von zentraler Datenverarbeitungseinrichtung und Anlagenverarbeitungseinrichtung, in Verbindung mit wenigstens einer Steuer-/Regeleinrichtung und oder Sensoranordnung und Kommunikationsverbindung, insbesondere einem Kommunikations-Netzwerk auch allgemeiner Art, wie beispielsweise ein LAN, WAN oder TCP/IP-Netzwerk, wobei auch Funk-Netzwerke wie beispielsweise Bluetooth, GSM und GPRS umfasst sind, ist somit eine effektive und effiziente, insbesondere vorausschauende und/oder präventive, Überwachung und/oder Steuer-/Regelung einer oder mehrerer Schaltanlagen ermöglicht.

In einer vorteilhaften Ausgestaltung sind zusätzliche Informationen betreffend Sensorinformationen und/oder Zustandswerte und/oder Messwerte und/oder Alarminformationen und/oder Trips und/oder Ereignisse von wenigstens einer Steuer-/Regeleinrichtung an die zentrale Datenverarbeitungseinrichtung zu weiteren Verarbeitung übermittelbar.

Auch ist vorsehbar, dass wenigstens eine Sensoranordnung wenigstens einen Temperaturmessfühler bzw. Lufttemperaturfühler, insbesondere zur Messung der Lufttemperatur in einer Schaltanlage oder einem Schaltschrank und Warnung vor Überlast, und/oder einen Infrarot-Temperatursensor und/oder einen Drucksensor, insbesondere zur Erfassung von Kurzschlussabschaltungen, Störlichtbögen, mechanischen Verformungen und/oder Vibrationen, und/oder einen optischen Sensor und/oder einen Luftfeuchtigkeitsmesser, insbesondere zur Bestimmung des Taupunktes der Luft im Schaltschrank zur Erkennung und/oder Warnung vor gefährlicher Kondensation und/oder Aktivierung einer Schaltfeldheizung, und/oder einen Staubsensor oder eine Kombination daraus umfasst.

Weiterhin ist vorteilhaft vorsehbar, dass wenigstens zwei Sensoren der jeweiligen Sensoranordnung ortsaufgelöst angeordnet und ausgelesen sind.

Eine weitere vorteilhafte Ausgestaltung des Systems sieht vor, dass wenigstens ein Datenspeicher mit abrufbar gespeicherten vorbestimmbaren Meldungen und/oder Anweisungen für wenigstens eine Anlagenverarbeitungseinrichtung und/oder für wenigstens eine Steuer-/Regeleinrichtung und/oder Handlungsanweisungen für Techniker, Operateure sowie Servicepersonal vorgesehen ist, der mit der zentralen Datenverarbeitungseinrichtung zusammenwirkt. Bei derartigen Anweisungen kann es sich beispielsweise um Steuerbefehle an die Steuer-/Regeleinrichtungen handeln eine Standfeldheizung zu aktivieren oder durch Leistungsschalter geschützte Teilbereiche der Schaltanlage und/oder einzelne Komponenten der Schaltanlage abzuschalten.

Als Kommunikationsverbindung ist vorteilhaft auch wenigstens eine Verbindung von der Art PCI-Bus, SCSI, USB, Firewire, RS-232, RS-485, CAN, CANopen, DeviceNet, EIB, Fieldbus Foundation, Interbus, LCN, Modbus, Profibus, SERCOS Interface, TTP, Ethernet, Realtime-Ethernet, EtherCAT, Ethernet-Powerlink, Profinet, Ethernet/IP, Industrial Ethernet oder eine Kombinationen daraus vorsehbar.

Die Kommunikationsverbindung kann dabei auch als Kommunikations-Netzwerk ausgebildet sein, wobei zwischen Anlagenverarbeitungseinrichtung und zentraler Datenverarbeitungseinrichtung ein Server schaltbar und/oder anordenbar ist.

Weiterhin wird die gestellte Aufgabe durch ein entsprechendes Verfahren zum Controlling von einer oder mehreren Schaltanlagen gelöst, wobei für jede Schaltanlage jeweils mittels wenigstens einer Steuer-/Regeleinrichtung Funktionen und/oder Zustände und/oder Umgebungsbedingungen wenigstens einer Schaltanlagenkomponente überwacht und/oder Sensorinformationen erfasst und regelbasiert ausgewertet werden, wobei als störkritisch bewertete Kenngrößen über die Anlagenverarbeitungseinrichtung an eine übergeordnete zentrale Datenverarbeitungseinrichtung übermittelt und in Zusammenschau ausgewertet werden und kenngrößenbasiert Meldungen und/oder Anweisungen zur vorausschauenden Störfallermittlung und/oder -vermeidung generiert werden.

Zusätzliche Informationen betreffend Sensorinformationen und/oder Zustandswerte und/oder Messwerte und/oder Alarminformationen und/oder Trips und/oder Ereignisse von wenigstens einer Steuer-/Regeleinrichtung können in vorteilhafter Weiterbildung des Verfahrens ebenfalls an die zentrale Datenverarbeitungseinrichtung zu weiteren Verarbeitung übermittelt werden.

Auch ist weiterführend vorsehbar, dass Sensorinformationen wenigstens eines Lufttemperaturfühlers, eines Infrarot-Temperatursensors, eines optischen Sensors, eines Luftfeuchtigkeitsmessers, eines Drucksensors oder eines Staubsensors oder einer Kombination daraus erfasst und ausgewertet werden.

In einer weiteren Ausführungsform werden die Sensorinformationen wenigstens einer Sensoranordnung ortsaufgelöst erfasst und/oder ausgewertet.

Auch ist verfahrensgemäß vorsehbar, dass das Generieren von Meldungen und/oder Anweisungen zur vorausschauenden Störfallermittlung und/oder -vermeidung im Zugriff und Zusammenwirken mit wenigstens einem Datenspeicher mit abrufbar gespeicherten vorbestimmbaren Meldungen und/oder Anweisungen für wenigstens eine Anlagenverarbeitungseinrichtung und/oder für wenigstens eine Steuer-/Regeleinrichtung und/oder Handlungsanweisungen für Techniker, Operateure sowie Servicepersonal durchgeführt wird.

In einer weiteren Ausführungsvariante wird die Kommunikation zwischen zentraler Datenverarbeitung und wenigstens einer Anlagenverarbeitungseinrichtung vermittels wenigstens einer Kommunikationsverbindung der Art PCI-Bus, SCSI, USB, Firewire, RS-232, RS-485, CAN, CANopen, DeviceNet, EIB, Fieldbus Foundation, Interbus, LCN, Modbus, Profibus, SERCOS Interface, TTP, Ethernet, Realtime-Ethernet, EtherCAT, Ethernet-Powerlink, Profinet, Ethernet/IP, Industrial Ethernet oder eine Kombinationen daraus durchgeführt.

Auch ist vorsehbar, dass die Kommunikation zwischen zentraler Datenverarbeitung und wenigstens einer Anlagenverarbeitungseinrichtung vermittels wenigstens einer drahtlosen Kommunikationsverbindung der Art Bluetooth, GSM oder GPRS durchgeführt wird, wobei auch ein Bluetooth-, WAN-, LAN- oder ein WLAN-Netzwerk verwendbar ist.

Die Kommunikation zwischen zentraler Datenverarbeitung und Anlagenverarbeitungseinrichtung kann in Weiterbildung des Verfahrens auch über einen zwischengeschalteten Server durchgeführt werden.

Die weitere Darlegung der Erfindung sowie vorteilhafter Weiterbildungen und Ausgestaltungen erfolgt anhand einer Zeichnung und Ausführungsbeispieles.

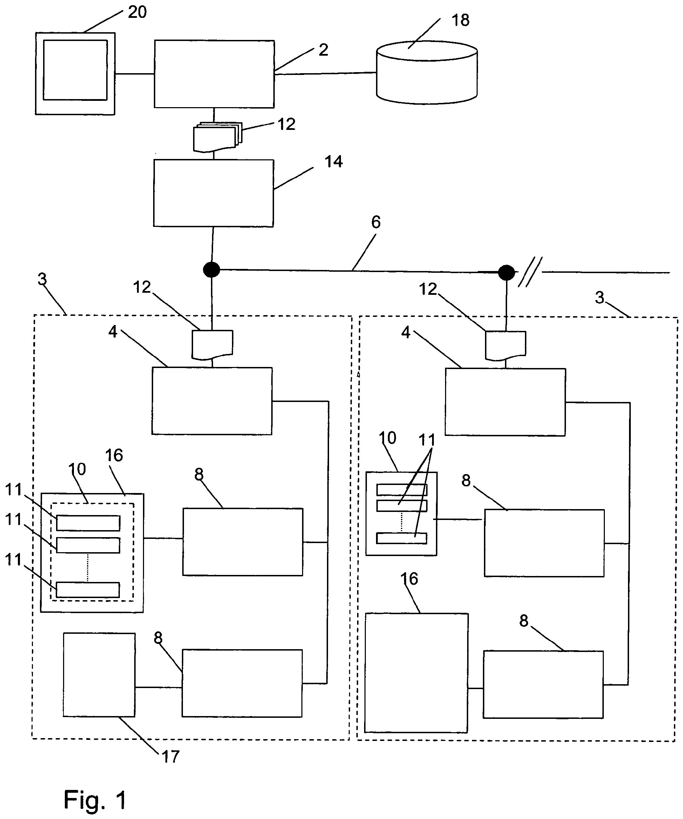

Es zeigt Fig. 1 ein beispielhaft ausgestaltetes System zum Controlling einer oder mehrerer Schaltanlagen.

In Fig. 1 ist ein beispielhaft ausgebildetes System 1 zum Controlling von einer oder mehreren Schaltanlagen 3 gezeigt, welches eine als Leitrechner ausgebildete übergeordnete zentrale Datenverarbeitungseinrichtung 2 sowie jeweils wenigstens eine einer jeden Schaltanlage 3 zugeordnete Anlagenverarbeitungseinrichtung 4 aufweist, die über eine Kommunikationsverbindung 6 zusammenwirken, um Informationen und/oder Anweisungen auszutauschen und wobei für jede Schaltanlage 3 eine oder mehrere Steuer-/Regeleinrichtungen 8 vorgesehen sind, welche jeweils Funktionen und/oder Zustände und/oder Umgebungsbedingungen wenigstens einer Schaltanlagenkomponente, insbesondere Leistungsschalter 17 und Motorstarter 16, überwachen und/oder Sensorinformationen wenigstens einer Sensoranordnung 10 erfassen, regelbasiert auswerten und als störkritisch bewertete Kenngrößen 12 über die jeweilige Anlagenverarbeitungseinrichtung 4 an die übergeordnete zentrale Datenverarbeitungseinrichtung 2, den Leitrechner, übermitteln, wobei die übermittelten Kenngrößen 12 einer Schaltanlage 3 in Zusammenschau ausgewertet und kenngrößenbasiert Meldungen und/oder Anweisungen zur vorausschauenden Störfallermittlung und/oder -vermeidung generiert werden. Die jeweilige Anlagenverarbeitungseinrichtung 4 ist dabei in die Schaltanlage integrierbar oder separat betreibbar.

Im gezeigten Beispiel ist der Leitrechner 2 dabei über einen Server 14, bei dem es sich nicht notwendigerweise um eine separate Datenverarbeitungseinrichtung handeln muss, mit mehreren Anlagenverarbeitungseinrichtungen 4, beispielsweise bei einem Schaltfeld mit mehreren Schaltanlagen 3, verbunden. Im hier dargelegten Beispiel sind zwei Schaltanlagen 3 explizit angegeben. Auch wenn die eingesetzten Schaltanlagen 3 insbesondere hinsichtlich Ausstattung und Funktionalität differieren können, weisen sie im Wesentlichen die gleichen grundlegenden Komponenten auf, so dass identische Bezugszeichen verwendet sind.

Die Anlagenverarbeitungseinrichtungen 4 wiederum sind an eine oder mehrere Steuer-/Regeleinrichtungen 8 angeschlossen beziehungsweise mit diesen verbunden, die eine oder mehrere, teilweise auch sehr unterschiedliche Funktionen innehaben können, wie beispielsweise die Steuerung/ Überwachung eines Motorstarters oder die Steuerung/ Überwachung eines Energieabganges oder die Überwachung des Zustandes eines Teiles einer elektrischen Anlage oder deren Umgebungsbedingungen. Im Bereich der elektrischen Energieversorgung können dabei noch vielfältige weitere Funktionen auftreten.

An eine solche Steuer-/Regeleinrichtung 8, welche sich hinsichtlich Hardware und Software nicht sonderlich von den vorgenanten Steuer-/Regeleinrichtungen 8 unterscheiden müssen, kann zu Überwachungs- und/oder Steuer- beziehungsweise Regelzwecken eine oder mehrere Sensoranordnungen 10 mit jeweils einer Vielzahl an unterschiedlichen Sensoren 11 angeschlossen werden, welche beispielsweise ortsaufgelöst Informationen über die lokal vorherrschende Lufttemperatur , die Luftfeuchtigkeit, die Staubbelastung, den Luftdruck und vieles mehr liefern können.

Der jeweiligen Steuer-/Regeleinrichtung 8 obliegt dabei die Aufgabe die Funktion der Sensoren der jeweiligen Sensoranordnung 10 zu überwachen, die Daten/Informationen der Sensoren zu erfassen und regelbasiert zu beurteilen. Werden beispielsweise Schwellwerte einer Kenngröße über- oder unterschritten, so meldet die jeweilige Steuer-/Regeleinrichtung 8 diese auffälligen und/oder kritischen Kenngrößen 12 an die entsprechende Anlagenverarbeitungseinrichtung 4 weiter und diese gibt die erhaltenen Informationen entsprechend an den Server 14 weiter. Hierbei handelt es sich um einen Alarm, Trip, Event oder ähnliches. Es können auch vorher festgelegte Handlungen und/oder Anweisungen aufgerufen und/oder abgearbeitet und/oder ausgegeben werden, wie beispielsweise die Anweisung zum Abschalten eines zuvor definierten Motorstarters 16 und dergleichen. Die zuvor genannten Schwellwerte sowie vorbestimmbaren Regeln zur Kenngrößenbewertung sind im laufenden Betrieb der Schaltanlage 3 änderbar. Ergänzend können auch Messwerte und Zustandswerte von der jeweiligen Steuer-/Regeleinrichtung 8 an den Server weitergeleitet und gemeldet werden. Die Informationen und/oder Meldungen, insbesondere die auffälligen Kenngrößen 12 die im Server 14 einlaufen werden vom Leitrechner 2 dann weiterverarbeitet. Dies kann sein eine Verarbeitung von Zustandswerten, Messwerten, Sensordaten, Alarm, Trips, Events, oder eine Kombination einer oder mehrerer dieser Größen sein. Aufgrund des Ergebnisses der Verarbeitung kann der Leitrechner 2 zuvor festgelegte und auf einem Datenspeicher 18 abrufbar abgelegte Handlungen durchführen, wie z.B. Meldungen auf einer Anzeigeeinrichtung 20 generieren, in Kommunikation mit anderen Steuer-/Regeleinrichtungen 8 treten, Schalt- und/oder Steuerbefehle an andere Steuer-/Regeleinrichtungen 8 senden und vieles mehr.

## Patentansprüche

1. System zum Controlling einer oder mehrerer Schaltanlagen (3), welches eine übergeordnete zentrale Datenverarbeitungseinrichtung (2) sowie jeweils wenigstens eine einer Schaltanlage (3) zugeordnete Anlagenverarbeitungseinrichtung (4) aufweist, die über eine Kommunikationsverbindung (6) zusammenwirken, um Informationen und/oder Anweisungen auszutauschen, wobei für jede Schaltanlage (3) eine oder mehrere Steuer-/Regeleinrichtungen (8) vorgesehen sind, welche Funktionen und/oder Zustände und/oder Umgebungsbedingungen wenigstens einer Schaltanlagenkomponente überwachen und/oder Sensorinformationen wenigstens einer Sensoranordnung (10) erfassen, regelbasiert auswerten und als störkritisch bewertete Kenngrößen (12) über die jeweilige Anlagenverarbeitungseinrichtung (4) an die übergeordnete zentrale Datenverarbeitungseinrichtung (2) übermitteln, **dadurch gekennzeichnet, dass** die übermittelten Kenngrößen einer Schaltanlage (3) in Zusammenschau ausgewertet und kenngrößenbasiert Meldungen und/oder Anweisungen zur vorausschauenden Störfallermittlung und/oder -vermeidung generiert werden, wobei die Auswertung eine Verarbeitung von Zustandswerten, Messwerten, Sensordaten, Alarm, Trips, Events, oder einer Kombination einer oder mehrerer dieser Größen umfasst und als Ergebnis der Verarbeitung zuvor festgelegte und auf einem Datenspeicher (18) abrufbar abgelegte Handlungen durchgeführt werden, wobei insbesondere Meldungen auf einer Anzeigeeinrichtung (20) generiert werden, in Kommunikation mit anderen Steuer-/Regeleinrichtungen (8) getreten wird und/oder Schalt- und/oder Steuerbefehle an andere Steuer-/Regeleinrichtungen (8) gesendet werden.

2. System nach Anspruch 1, **dadurch gekennzeichnet, dass** zusätzliche Informationen betreffend Sensorinformationen und/oder Zustandswerte und/oder Messwerte und/oder Alarminformationen und/oder Trips und/oder Ereignisse von wenigstens einer Steuer-/Regeleinrichtung (8) an die zentrale Datenverarbeitungseinrichtung (2) zur weiteren Verarbeitung übermittelbar sind.

3. System nach einem der Ansprüche 1 oder 2, **dadurch gekennzeichnet, dass** die Sensoranordnung (10) wenigstens einen Lufttemperaturfühler, einen Infrarot-Temperatursensor, einen optischen Sensor, einen Luftfeuchtigkeitsmesser oder einen Staubsensor oder eine Kombination daraus umfasst.

4. System nach einem der vorherigen Ansprüche, **dadurch gekennzeichnet, dass** wenigstens zwei Sensoren (11) der jeweiligen Sensoranordnung (10) ortsaufgelöst angeordnet und ausgelesen sind.

5. System nach einem der vorherigen Ansprüche, **dadurch gekennzeichnet, dass** wenigstens ein Datenspeicher (18) mit abrufbar gespeicherten vorbestimmbaren Meldungen und/oder Anweisungen für wenigstens eine Anlagenverarbeitungseinrichtung (4) und/oder für wenigstens eine Steuer-/Regeleinrichtung (8) und/oder Handlungsanweisungen für Techniker, Operateure sowie Servicepersonal vorgesehen ist, der mit der zentralen Datenverarbeitungseinrichtung (2) zusammenwirkt.

6. System nach einem der vorherigen Ansprüche, **dadurch gekennzeichnet, dass** es sich bei der Kommunikationsverbindung (6) um eine Verbindung von der Art PCl-Bus, SCSI, USB, Firewire, RS-232, RS-485, CAN, CANopen, DeviceNet, EIB, Fieldbus Foundation, Interbus, LCN, Modbus, Profibus, SERCOS Interface, TTP, Ethernet, Realtime-Ethernet, EtherCAT, Ethernet-Powerlink, Profinet, Ethernet/IP, Industrial Ethernet oder eine Kombinationen daraus handelt.

7. System nach einem der vorherigen Ansprüche, **dadurch gekennzeichnet, dass** die Kommunikationsverbindung (6) als Kommunikations-Netzwerk ausgebildet ist.

8. System nach einem der vorherigen Ansprüche, dass zwischen Anlagenverarbeitungseinrichtung (4) und zentraler Datenverarbeitungseinrichtung (2) ein Server (14) geschaltet ist.

9. Verfahren zum Controlling einer oder mehrerer Schaltanlagen (3), wobei für jede Schaltanlage (3) jeweils mittels wenigstens einer Steuer-/Regeleinrichtung (8) Funktionen und/oder Zustände und/oder Umgebungsbedingungen wenigstens einer Schaltanlagenkomponente überwacht und/oder Sensorinformationen erfasst und regelbasiert ausgewertet werden und wobei als störkritisch bewertete Kenngrößen über die Anlagenverarbeitungseinrichtung (4) an eine übergeordnete zentrale Datenverarbeitungseinrichtung (2) übermittelt, **dadurch gekennzeichnet, dass** die als störkritisch bewerteten Kenngrössen in Zusammenschau ausgewertet und/oder kenngrößenbasiert Meldungen und/oder Anweisungen zur vorausschauenden Störfallermittlung und/oder -vermeidung generiert werden, wobei zur Auswertung Zustandswerte, Messwerte, Sensordate, Alarm, Trips, Events, oder eine Kombination einer oder mehrerer dieser Größen verarbeitet werden und als Ergebnis der Verarbeitung zuvor festgelegte und auf einem Datenspeicher (18) abrufbar abgelegte Handlungen durchgeführt werden, wobei insbesondere Meldungen auf einer Anzeigeeinrichtung (20) generiert werden, in Kommunikation mit anderen Steuer-/Regeleinrichtungen (8) getreten wird und/oder Schalt- und/oder Steuerbefehle an andere Steuer-/Regeleinrichtungen (8) gesendet werden.

10. Verfahren nach Anspruch 9, **dadurch gekennzeichnet, dass** zusätzliche Informationen betreffend Sensorinformationen und/oder Zustandswerte und/oder Messwerte und/oder Alarminformationen und/oder Trips und/oder Ereignisse von wenigstens einer Steuer-/Regeleinrichtung an die zentrale Datenverarbeitungseinrichtung (2) zu weiteren Verarbeitung übermittelt werden.

11. Verfahren nach einem der Ansprüche 9 oder 10, **dadurch gekennzeichnet, dass** Sensorinformationen wenigstens eines Lufttemperaturfühlers, eines Infrarot-Temperatursensors, eines optischen Sensors, eines Luftfeuchtigkeitsmessers oder eines Staubsensors oder einer Kombination daraus erfasst und ausgewertet werden.

12. Verfahren nach einem der vorherigen Ansprüche 9 bis 11, **dadurch gekennzeichnet, dass** die Sensorinformationen wenigstens einer Sensoranordnung (10) ortsaufgelöst erfasst und/oder ausgewertet werden.

13. Verfahren nach einem der Ansprüche 9 bis 12, **dadurch gekennzeichnet, dass** das Generieren von Meldungen und/oder Anweisungen zur vorausschauenden Störfallermittlung und/oder -vermeidung im Zugriff und Zusammenwirken mit wenigstens einem Datenspeicher (18) mit abrufbar gespeicherten, vorbestimmbaren Meldungen und/oder Anweisungen für wenigstens eine Anlagenverarbeitungseinrichtung (4) und/oder für wenigstens eine Steuer-/Regeleinrichtung (8) und/oder Handlungsanweisungen für Techniker, Operateure sowie Servicepersonal durchgeführt wird.

14. Verfahren nach einem der vorherigen Ansprüche 9 bis 13, **dadurch gekennzeichnet, dass** die Kommunikation zwischen zentraler Datenverarbeitung (2) und wenigstens einer Anlagenverarbeitungseinrichtung (4) vermittels wenigstens einer Kommunikationsverbindung (6) der Art PCl-Bus, SCSI, USB, Firewire, RS-232, RS-485, CAN, CANopen, DeviceNet, EIB, Fieldbus Foundation, Interbus, LCN, Modbus, Profibus, SERCOS Interface, TTP, Ethernet, Realtime-Ethernet, EtherCAT, Ethernet-Powerlink, Profinet, Ethernet/IP, Industrial Ethernet oder eine Kombinationen daraus durchgeführt wird.

15. Verfahren nach einem der vorherigen Ansprüche 9 bis 14, **dadurch gekennzeichnet, dass** die Kommunikation zwischen zentraler Datenverarbeitung (2) und wenigstens einer Anlagenverarbeitungseinrichtung (4) vermittels wenigstens einer drahtlosen Kommunikationsverbindung (6) der Art Bluetooth, GSM oder GPRS durchgeführt wird.

16. Verfahren nach einem der Ansprüche 9 bis 15, **dadurch gekennzeichnet, dass** die Kommunikation über ein Bluetooth-, WAN-, LAN- oder ein WLAN-Netzwerk durchgeführt wird.

17. Verfahren nach einem der vorherigen Ansprüche 9 bis 16, **dadurch gekennzeichnet, dass** die Kommunikation zwischen zentraler Datenverarbeitung (2) und Anlagenverarbeitungseinrichtung (4) über einen zwischengeschalteten Server (14) durchgeführt wird.

## Claims

1. System for controlling one or more switching installations (3) that has a superordinate central data processing device (2) and in each case at least one installation processing device (4) associated with the switching installation (3), which cooperate via a communication link (6) in order to interchange information and/or instructions, wherein each switching installation (3) has one or more control/regulating devices (8) provided for it that monitor functions and/or states and/or ambient conditions of at least one switching installation component and/or capture sensor information from at least one sensor arrangement (10), subject the latter to rule-based evaluation and transmit parameters (12) rated as interference-critical to the superordinate central data processing device (2) via the respective installation processing device (4), **characterized in that** the transmitted parameters of a switching installation (3) are evaluated in combination and reports and/or instructions for predictive fault ascertainment and/or avoidance are generated on a parameter basis, wherein evaluation comprises processing of state values, measured values, sensor data, alarms, trips, events or a combination of one or more of these variables and, as the result of the processing, previously stipulated actions stored retrievably in a data memory (18) are performed, with particularly reports being generated on a display device (20), communication being taken up with other control/regulating devices (8) and/or switching and/or control commands being sent to other control/regulating devices (8).

2. System according to Claim 1, **characterized in that** additional information relating to sensor information and/or state values and/or measured values and/or alarm information and/or trips and/or events is transmittable from at least one control/regulating device (8) to the central data processing device (2) for further processing.

3. System according to either of Claims 1 and 2, **characterized in that** the sensor arrangement (10) comprises at least one air temperature sensor, an infrared temperature sensor, an optical sensor, a hygrometer or a dust sensor or a combination thereof.

4. System according to one of the preceding claims, **characterized in that** at least two sensors (11) of the respective sensor arrangement (10) are arranged and read in a spatially resolved manner.

5. System according to one of the preceding claims, **characterized in that** at least one data memory (18) having retrievably stored predetermined reports and/or instructions for at least one installation processing device (4) and/or for at least one control/regulating device (8) and/or action instructions for engineers, operators and service personnel is provided that cooperates with the central data processing device (2).

6. System according to one of the preceding claims, **characterized in that** the communication link (6) is a connection of the type PCI Bus, SCSI, USB, Firewire, RS-232, RS-485, CAN, CANopen, DeviceNet, EIB, Fieldbus Foundation, Interbus, LCN, Modbus, Profibus, SERCOS Interface, TTP, Ethernet, Realtime-Ethernet, EtherCAT, Ethernet-Powerlink, Profinet, Ethernet/IP, Industrial Ethernet or a combination thereof.

7. System according to one of the preceding claims, **characterized in that** the communication link (6) is in the form of a communication network.

8. System according to one of the preceding claims, **characterized in that** the installation processing device (4) and the central data processing device (2) have a server (14) connected between them.

9. Method for controlling one or more switching installations (3), wherein, for each switching installation (3), in each case at least one control/regulating device (8) is used to monitor functions and/or states and/or ambient conditions of at least one switching installation component and/or to capture sensor information and to subject sensor information to rule-based evaluation and wherein parameters rated as interference-critical are transmitted to a superordinate central data processing device (2) via the installation processing device (4), **characterized in that** the parameters rated as interference-critical are evaluated in combination and/or reports and/or instructions for predictive fault ascertainment and/or avoidance are generated on a parameter basis, wherein evaluation involves state values, measured values, sensor data, alarms, trips, events or a combination of one or more of these variables being processed and, as the result of the processing, previously simulated actions stored retrievably in a data memory (18) are performed, with particularly reports being generated on a display device (20), communication being taken up with other control/regulating devices (8) and/or switching and/or control commands being sent to other control/regulating devices (8).

10. Method according to Claim 9, **characterized in that** additional information relating to sensor information and/or state values and/or measured values and/or alarm information and/or trips and/or events is transmitted from at least one control/regulating device to the central data processing device (2) for further processing.

11. Method according to either of Claims 9 and 10, **characterized in that** sensor information from at least one air temperature sensor, an infrared temperature sensor, an optical sensor, a hygrometer or a dust sensor or a combination thereof is captured and evaluated.

12. Method according to one of the preceding Claims 9 to 11, **characterized in that** the sensor information from at least one sensor arrangement (10) is captured and/or evaluated in a spatially resolved manner.

13. Method according to one of Claims 9 to 12, **characterized in that** the generation of reports and/or instructions for predictive fault ascertainment and/or avoidance is performed by accessing and cooperating with at least one data memory (18) having retrievably stored, predeterminable reports and/or instructions for at least one installation processing device (4) and/or for at least one control/regulating device (8) and/or action instructions for engineers, operators and service personnel.

14. Method according to one of the preceding Claims 9 to 13, **characterized in that** the communication between central data processing (2) and at least one installation processing device (4) is performed by means of at least one communication link (6) of the type PCI Bus, SCSI, USB, Firewire, RS-232, RS-485, CAN, CANopen, DeviceNet, EIB, Fieldbus Foundation, Interbus, LCN, Modbus, Profibus, SERCOS Interface, TTP, Ethernet, Realtime-Ethernet, EtherCAT, Ethernet-Powerlink, Profinet, Ethernet/IP, Industrial Ethernet or a combination thereof.

15. Method according to one of the preceding Claims 9 to 14, **characterized in that** the communication between central data processing (2) and at least one installation processing device (4) is performed by means of at least one wireless communication link (6) of the type Bluetooth, GSM or GPRS.

16. Method according to one of Claims 9 to 15, **characterized in that** the communication is performed via a Bluetooth, WAN, LAN or WLAN network.

17. Method according to one of the preceding Claims 9 to 16, **characterized in that** the communication between central data processing (2) and installation processing device (4) is performed via an interposed server (14).

## Revendications

1. Système destiné à commander une ou plusieurs installations de commutation (3), comportant un dispositif de traitement de données central (2) d'ordre supérieur et au moins un dispositif de traitement d'installation (4) respectivement associé à une installation de commutation (3), qui coopèrent par l'intermédiaire d'une liaison de communication (6) afin d'échanger des informations et/ou des instructions, dans lequel, pour chaque installation de commutation (3), il est prévu un ou plusieurs dispositifs de commande/régulation (8) qui surveillent des fonctions et/ou des états et/ou des conditions ambiantes d'au moins un composant de l'installation de commutation et/ou qui détectent des informations de capteurs d'au moins un système de capteur (10), les évaluent sur la base de règles et les transmettent, sous la forme de grandeurs caractéristiques (12) évaluées du point de vue de leur caractère perturbateur critique par l'intermédiaire du dispositif de traitement d'installation (4) respectif, au dispositif de traitement de données central (2) d'ordre supérieur, **caractérisé en ce que** les grandeurs caractéristiques transmises d'une installation de commutation (3) sont évaluées en association et **en ce que** des messages et/ou des instructions à base de grandeurs caractéristiques sont générées pour déterminer et/ou éviter de manière prévisionnelle des accidents, dans lequel l'évaluation consiste à traiter des valeurs d'états, des valeurs de mesures, des données de capteurs, des alarmes, des déclenchements, des événements ou une combinaison d'une ou plusieurs desdites grandeurs et, en réponse au traitement, des opérations établies à l'avance et stockées de manière interrogeable dans une mémoire de données (18) sont effectuées, dans lequel des messages sont notamment générés sur un dispositif d'affichage (20), une communication est établie avec d'autres dispositifs de commande/régulation (8) et/ou des instructions de commutation et/ou de commande sont envoyées à d'autres unités de commande/régulation (8).

2. Système selon la revendication 1, **caractérisé en ce que** des informations supplémentaires concernant des informations de capteurs et/ou des valeurs d'états et/ou des valeurs de mesures et/ou des informations d'alarmes et/ou des déclenchements et/ou des événements peuvent être transmis par au moins un dispositif de commande/régulation (8) au dispositif de traitement de données central (2) en vue d'autres traitements.

3. Système selon l'une quelconque des revendications 1 ou 2, **caractérisé en ce que** le système de capteur (10) comprend au moins un détecteur de température, un capteur de température infrarouge, un capteur optique, un dispositif de mesure d'humidité de l'air ou un capteur de poussière ou une combinaison de ceux-ci.

4. Système selon l'une quelconque des revendications précédentes, **caractérisé en ce qu'**au moins deux capteurs (11) du système de capteur (10) sont disposés de façon résolue spatialement et sont lus.

5. Système selon l'une quelconque des revendications précédentes, **caractérisé en ce qu'**il est prévu au moins une mémoire de données (18) dans laquelle sont stockés de manière interrogeable des messages et/ou des instructions pouvant être prédéterminées pour au moins un dispositif de traitement de d'installation (4) et/ou pour au moins un dispositif de commande/régulation (8) et/ou des indications d'intervention destinées à des techniciens, des opérateurs et des personnels d'entretien, qui coopère avec le dispositif de traitement de données central (2).

6. Système selon l'une quelconque des revendications précédentes, **caractérisé en ce que** la lison de communication (6) est une liaison du type bus PCI, SCSI, USB, Firewire, RS-232, RS-485, CAN, CANopen, DeviceNet, EIB, Fielbus Foundation, Interbus, LCN, Modbus, Profibus, SERCOS Interface, TTP, Ethernet, Ethernet Temps Réel, EtherCAT, Ethernet-Powerlink, Profinet, Ethernet/IP, Ethernet Industriel, ou une combinaison de ceux-ci.

7. Système selon l'une quelconque des revendications précédentes, **caractérisé en ce que** la liaison de communication (6) est réalisée sous la forme d'un réseau de communication.

8. Système selon l'une quelconque des revendications précédentes, **caractérisé en ce qu'**un serveur (14) est connecté entre le dispositif de traitement d'installation (4) et le dispositif de traitement de données central (2).

9. Procédé de commande d'une ou plusieurs installations de commutation (3), dans lequel, pour chaque installation de commutation (3), des fonctions et/ou des états et/ou des conditions ambiantes d'au moins un composant d'installation de commutation sont surveillés et/ou des informations de capteurs sont détectées et sont respectivement évaluées sur la base de règles au moyen d'au moins un dispositif de commande/régulation (8), et dans lequel elles sont transmises par l'intermédiaire du dispositif de traitement d'installation (4) à un dispositif de traitement de données central (2) d'ordre supérieur sous la forme de grandeurs caractéristiques évaluées du point de vue de leur caractère perturbateur critique, **caractérisé en ce que** les grandeurs caractéristiques évaluées du point de vue de leur caractère perturbateur critique sont évaluées en association et/ou des messages et/ou des instructions basées sur les grandeurs caractéristiques sont générées pour la déterminer et/ou éviter de manière prévisionnelle des accidents, dans lequel des valeurs d'états, des valeurs de mesures, des données de capteurs, des alarmes, des déclenchements, des événements ou une combinaison d'une ou plusieurs desdites grandeurs sont traités à des fins d'évaluation et, en réponse au traitement, des opérations établies à l'avance et stockées de manière interrogeable dans une mémoire de données (18) sont effectuées, dans lequel des messages sont notamment générés sur un dispositif d'affichage (20), une communication est établie avec d'autres dispositifs de commande/régulation (8) et/ou des instructions de commutation et/ou de commande sont envoyées à d'autres dispositifs de commande/régulation (8).

10. Procédé selon la revendication 9, **caractérisé en ce que** des informations supplémentaires concernant des informations de capteurs et/ou des valeurs d'états et/ou des valeurs de mesure et/ou des informations d'alarmes et/ou des déclenchements et/ou des événements sont transmis par au moins un dispositif de commande/régulation au dispositif de traitement de données central (2) en vue d'un traitement supplémentaire.

11. Procédé selon l'une quelconque des revendications 9 ou 10, **caractérisé en ce que** des informations de capteurs d'au moins un détecteur de température de l'air, un capteur de température infrarouge, un capteur optique, un dispositif de mesure d'humidité de l'air ou d'un capteur de poussière ou une combinaison de ceux-ci sont détectés et évaluées.

12. Procédé selon l'une quelconque des revendications 9 à 11 précédentes, **caractérisé en ce que** les informations de capteurs d'au moins un système de capteur (10) sont résolues spatialement et/ou sont évaluées.

13. Procédé selon l'une quelconque des revendications 9 à 12, **caractérisé en ce que** la génération de messages et/ou d'instructions pour déterminer et/ou éviter de manière prévisionnelle des incidents sont effectuées par accès à au moins une mémoire de données (18) et en coopération avec celle-ci, ladite mémoire contenant des messages et/ou des instructions prédéterminées stockées de manière interrogeable destinées à au moins un dispositif de traitement de d'installation (4) et/ou à au moins un dispositif de commande/régulation (8) et/ou des instructions d'intervention destinées à des techniciens, des opérateurs et des personnels d'entretien.

14. Procédé selon l'une quelconque des revendications 9 à 13 précédentes, **caractérisé en ce que** la communication entre le dispositif de traitement de données central (2) et au moins un dispositif de traitement d'installation (4) est effectuée par l'intermédiaire d'au moins une liaison de communication (6) du type bus PCI, SCSI, USB, Firewire, RS-232, RS-485, CAN, CANopen, DeviceNet, EIB, Fieldbus Foundation, Interbus, LCN, Modbus, Profibus, SERCOS Interface, TTP, Ethernet, Ethernet Temps Réel, EtherCAT, Ethernet-Powerlink, Profinet, Ethernet/IP, Ethernet Industriel, ou une combinaison de ceux-ci.

15. Procédé selon l'une quelconque des revendications 9 à 14 précédentes, **caractérisé en ce que** la communication entre l'unité de traitement centrale (2) et au moins un dispositif de traitement d'installation (4) est effectuée par l'intermédiaire d'au moins une liaison de communication sans fil (6) du type Bluetooth, GSM ou GPRS.

16. Procédé selon l'une quelconque des revendications 9 à 15, **caractérisé en ce que** la communication est effectuée par l'intermédiaire d'un réseau Bluetooth, WAN, LAN ou WLAN.

17. Procédé selon l'une quelconque des revendications 9 à 16 précédentes, **caractérisé en ce que** la communication entre l'unité de traitement de données central (2) et le dispositif de traitement d'installation (4) est effectuée par l'intermédiaire d'un serveur (14) connecté en position intermédiaire.
